# EUROPÄISCHE PATENTSCHRIFT

(11) **EP 0 446 309 B1**
(45) Veröffentlichungstag und Bekanntmachung des Hinweises auf die Patenterteilung: **06.04.1994**
(21) Anmeldenummer: 90910736.9
(22) Anmeldetag: 25.07.1990
(51) Int. Cl.: B60T 8/32

(54) **BLOCKIERGESCHÜTZTE, HYDRAULISCHE BREMSANLAGE**
ANTI-LOCK HYDRAULIC BRAKE SYSTEM
CIRCUIT DE FREINAGE HYDRAULIQUE ANTI-BLOCAGE

(30) Priorität: 29.09.1989 DE 3932531
(43) Veröffentlichungstag der Anmeldung: 18.09.1991
(73) Patentinhaber: ITT Automotive Europe GmbH, 60488 Frankfurt (DE)
(72) Erfinder: REINARTZ, Hans, D., D-6000 Frankfurt 50 (DE); STEFFES, Helmut, D-6234 Hattersheim 3 (DE); VOLZ, Peter, D-6100 Darmstadt (DE); BECK, Erhardt, D-6290 Weilburg (DE)
(86) Internationale Anmeldenummer: EP9001215
(87) Internationale Veröffentlichungsnummer: WO9104893

(56) Entgegenhaltungen:
- DE-A- 3 842 699
- DE-B- 1 022 065
- FR-A- 1 574 083
- FR-A- 2 200 459

## Beschreibung

Die Erfindung bezieht sich auf eine blockiergeschützte, hydraulische Bremsanlage mit mindestens einer Radbremse und einer Hilfsdruckquelle, wobei in die Druckleitung zwischen der Hilfsdruckquelle und der Radbremse ein Einlaßventil eingesetzt und die Radbremse über ein Auslaßventil an eine Rücklaufleitung angeschlossen ist, wobei in die Leitung zwischen der Hilfsdruckquelle und dem Einlaßventil eine Differenzdruckbegrenzer eingefügt ist, dessen Steuerkolben sowohl von der Kraft einer Feder als auch vom Druck in der Radbremse in einem die Leitung öffnenden Sinne beaufschlagt ist.

Eine derartige Bremsanlage ist aus der nicht vorveröffentlichten DE-Anmeldung P 38 42 699.4 vom 19.12.1988 bekannt. Der Differenzdruckbegrenzer sorgt dafür, daß am Einlaßventil stets ein bestimmtes Druckgefälle herrscht. Es hat sich herausgestellt, daß auf diese Weise die Schaltgeräusche des Einlaßventils erheblich reduziert werden können. Es tritt aber auch ein Nachteil auf: Das Einlaßventil weist in seiner geöffneten Position eine Drosselcharakteristik auf. Dies hat einerseits konstruktive Gründe, da der Ventildurchgang nicht beliebig weit geöffnet werden kann. Andererseits bestehen aber auch Überlegungen regelungstechnischer Art: In der Druckaufbauphase einer Regelbremsung soll die Geschwindigkeit des Druckanstiegs begrenzt werden, damit der Druck nicht über ein bestimmtes Maß hinaus anwächst.

Wird nun während einer nicht geregelten Bremsung der Hauptbremszylinder schnell und heftig betätigt, so wird innerhalb einer kurzen Zeiteinheit eine große Druckmittelmenge durch die Drossel des Einlaßventils gedrückt. Damit entsteht ein Druckgefälle am Einlaßventil, was wiederum zur Folge hat, daß der Differenzdruckbegrenzer sperrt. Der Druckaufbau wird verzögert. Dieses Phänomen tritt insbesondere dann auf, wenn die Bremsflüssigkeit kalt ist und eine hohe Zähigkeit aufweist, dann reicht schon eine kleine Druckmittelgeschwindigkeit aus, um die kritische Druckdifferenz am Einlaßventil zu erzeugen.

Aus dem Dokument JP-A-56-50836 ist bereits ein temperaturempfindliches Elektromagnetventil für einen Antiblockierregler bekannt geworden. Das Elektromagnetventil ist während der Bremsdruckregelung zum Zwecke des Belüftens der Arbeitskammer im Vakuumbremskraftverstärker geöffnet, so daß der Atmosphärendruck in der Arbeitskammer ansteht, während an der entgegengelegenen, vom Servokolben des Vakuumbremskraftverstärkers getrennten Vakuumkammer über einen Anschlußstutzen eine Vakuumquelle wirksam ist. Infolge der Druckdifferenz und damit durch die Bewegung des Servokolbens gelangt ein vom Servokolben betätigbares, den Hauptzylinderdruck zur Radbremse steuerndes Rückschlagventil in Sperrstellung, wobei ein am Elektromagnetventil angeordnetes Bimetall den Durchlaßquerschnitt zur Vakuumkammer variabel einzustellen vermag, um im Tieftemperaturbetrieb und damit bei relativ hoher Viscosität der Bremsflüssigkeit eine konstante Geschwindigkeit des Servokolbens zu ermöglichen.

Ferner ist aus der FR-A-1.574.083 ein Sitzventil bereits hervorgegangen, das abhängig von der Flüssigkeitstemperatur eine Veränderung des Flüssigkeitsstroms zuläßt. Hierzu ist das Ventil mit seinem Ventilschaft innerhalb einer gehäusefesten Ventilaufnahme axial beweglich geführt, wobei zwischen der gehäusefesten Ventilaufnahme und einem am entgegengesetzten Schaftende angeordneten Ventilsitzkörper mehrere Bimetall-Tellerfedern koaxial angeordnet sind. Abhängig von der Flüssigkeitstemperatur bewegt sich der Ventilsitzkörper mehr oder weniger in Richtung auf einen Nebenauslaß, so daß ein Teilstrom des zum Druckmittelverbraucher geförderten Hauptstroms abgezweigt werden kann.

Die Erfindung beruht daher auf der Aufgabe einerseits die Vorteile eines Differenzdruckbegrenzers zu erhalten und andererseits bei einer nicht geregelten Bremsung im gesamten Temperaturbereich der Bremsflüssigkeit einen schnellen, ungehinderten Druckaufbau zu erzielen. Die Aufgabe wird dadurch gelöst, daß ein temperaturempfindliches, krafterzeugendes Element auf den Steuerkolben einwirkt.

Am einfachsten läßt sich ein solches Element durch eine Bimetallfeder darstellen.

Grundsätzlich lassen sich zwei Lösungswege verfolgen. Zum einen kann die Bimetallfeder parallel zur Steuerfeder angeordnet werden. Wird die Feder nun so konstruiert, daß sie sich bei Kälte ausdehnt, so besteht bei tiefen Temperaturen neben der Kraft der Steuerfeder eine zusätzliche Kraft, erzeugt durch die Bimetallfeder, zur Verfügung. Dadurch wird der Schaltpunkt des Differenzdruckbegrenzers heraufgesetzt, wodurch selbst bei hohen Druckgefällen am Einlaßventil der Differenzdruckbegrenzer nicht sperrt. Bei hohen Temperaturen zieht sich die Bimetallfeder so weit zusammen, daß ihre Länge kleiner wird als die Blocklänge der Steuerfeder. Die Bimetallfeder hat nun keinen Einfluß mehr auf das Steuerverhalten des Differensdruckbegrenzers, so daß der Umschaltpunkt allein von der Steuerfeder bestimmt wird.

Eine andere Möglichkeit besteht darin, die Bimetallfeder zwischen dem Steuerkolben und einem Stößel, der am Schließkörper des Differenzdruckbegrenzers anliegt, anzuordnen. Dehnt sich nun die Bimetallfeder bei Kälte aus, so wird der Schließkörper zwangsweise vom Ventilsitz abgehoben, so daß unabhängig von der Bewegung des Steuerschiebers aufgrund eines Druckgefälles am Einlaßventil auf jeden Fall der Ventildurchgang offen bleibt.

Die Bimetallfeder kann in unterschiedlichen Formen realisiert werden. So können einzelne Bimetallfederelemente als Tellerfedern ausgebildet werden, die zu einem Tellerfederpaket zusammengefaßt werden.

Eine ander Form sieht vor, daß gebogene Blattfedern an ihren konvexen Seiten mittig zusammengehalten sind.

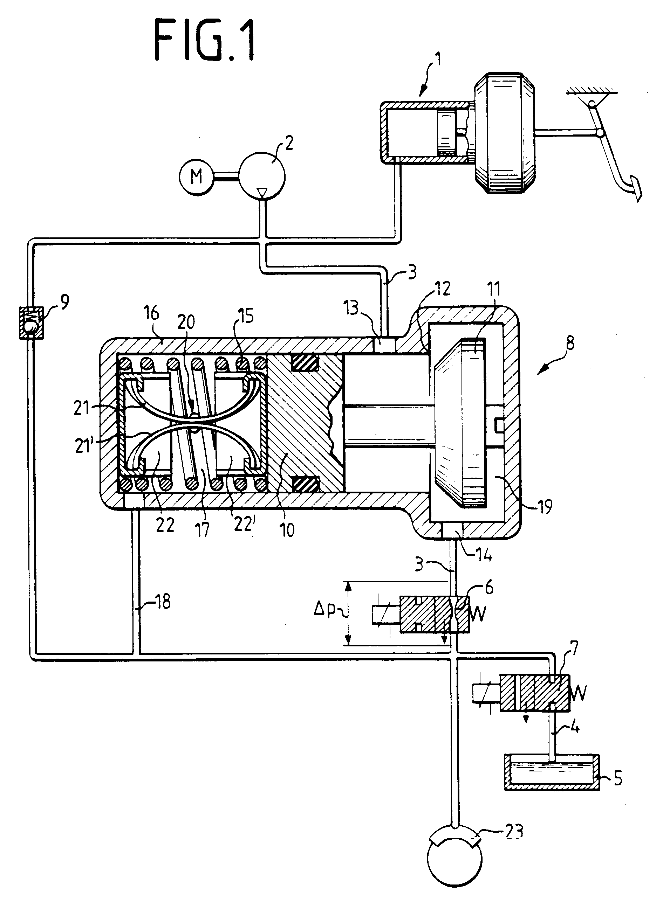

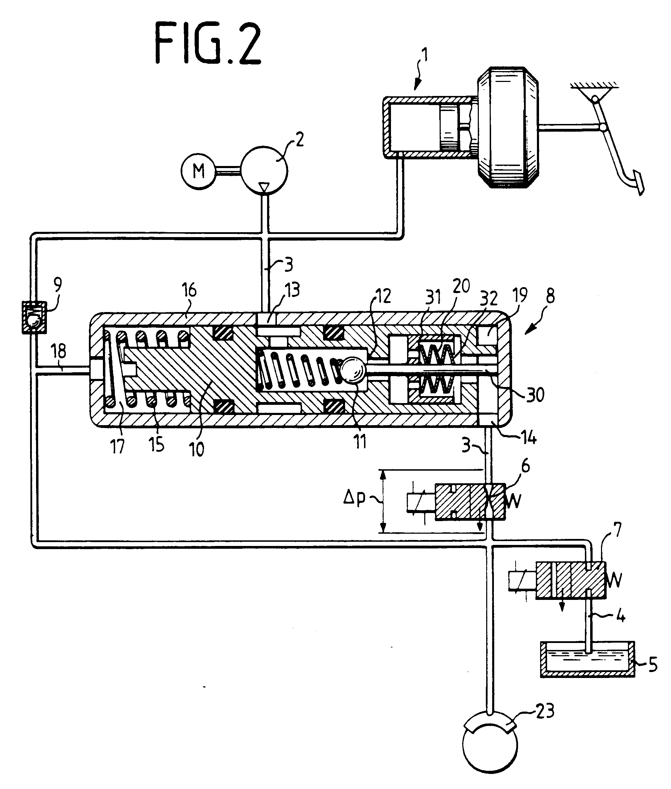

Im folgenden soll anhand von zwei Ausführungsbeispielen die erfinderische Idee näher erläutert werden. Dabei zeigt die Figur 1 ein erstes und die Figur 2 ein zweites Ausführungsbeispiel. Zunächst soll auf die Figur 1 Bezug genommen werden.

Die Bremsanlage besteht aus einem Hauptbremszylinder 1 und einer Pumpe 2, die von einem Motor M angetrieben wird. Der Hauptbremszylinder 1 und die Pumpe 2 stehen über je eine Zweigleitung mit der Bremsleitung 3 in Verbindung, die zur Radbremse 23 führt. Diese wiederum steht über eine Rücklaufleitung 4 mit einem Vorratsbehälter 5 in Verbindung. In die Bremsleitung 3 ist ein Einlaßventil 6 eingefügt, das elektromagnetisch betätigt wird, wobei das Ventil 6 in seiner Grundstellung die Bremsleitung offen hält, bzw. eine leichte Drosselwirkung aufweist. In die Rücklaufleitung 4 ist ein Auslaßventil 7 eingefügt, das ebenfalls elektromagnetisch betätigt wird und in seiner Grundposition die Rücklaufleitung 4 sperrt. Zwischen dem Hauptbremszylinder 1 bzw. der Pumpe 2 und dem Einlaßventil 6 ist ein Differenzdruckbegrenzer 8 eingefügt. Ein Rückschlagventil 9 ist in einer Parallelleitung zum Einlaßventil 6 und zum Differenzdruckbegrenzer 8 vorgesehen.

Der Differenzdruckbegrenzer 8 weist ein Gehäuse 16 auf, in dem ein Steuerkolben 10 dichtend geführt ist.

Gemäß dem Ausführungsbeispiel der Figur 1 ist der Steuerkolben 10 fest mit einem Schließkörper 11 verbunden, der mit einem gehäusefesten Ventilsitz 12 zusammenwirkt. Am Ventil 11, 12 vorbei besteht eine Verbindung zwischen den Anschlüssen 13 und 14. Am Anschluß 13 ist die Pumpe 2 bzw. der Hauptbremszylinder 1 angeschlossen, während der Anschluß 14 dem Einlaßventil 6 zugeordnet ist.

Der Steuerkolben 10 wird von einer Steuerfeder 15 belastet, die einerseits am Steuerkolben 10 und andererseits am Boden des Gehäuses 16 abgestützt ist. Sie ist in einem Steuerraum 17 angeordnet, der über eine Zweigleitung 18 unmittelbar mit der Radbremse verbunden ist. Die Steuerfeder 15 und der Druck im Steuerraum 17 wirken nun derart auf den Steuerkolben 10 ein, daß das Ventil 11, 12 offen gehalten wird. Als Gegendruck wirkt der Druck im Auslaßraum 19, in den der Anschluß 14 mündet. Solange der Druck in Räumen 17 und 19 gleich ist, hält die Feder 15 das Ventil 11, 12 offen. Sobald der Druck im Raum 17 sinkt und die Differenz zwischen den Drücken in den Räumen 17 und 19 in der Lage ist, die Kraft der Feder 15 zu überwinden, schließt das Ventil 11, 12.

Im Steuerraum 17 ist weiterhin eine Bimetallfeder 20 angeordnet, und zwar innerhalb des Raumes, der von der Steuerfeder 15 umfasst wird.

Die Bimetallfeder 20 besteht aus zwei gebogenen Blattfedern 21, 21' die mit ihren konvexen Seiten mittig aneinander befestigt sind. Die Blattfedern 21, 21' liegen dabei in einer Ebene. Die jeweils einander zugeordneten Enden der Blattfeder 21, 21' greifen in ein Führungsteil 22, 22' ein, wobei das eine Führungsteil 22' am Steuerkolben 10 und das andere Führungsteil 22 am Boden des Gehäuses abgestützt ist.

Die Steuerfeder 15 und die Bimetallfeder 20 wirken somit gleichsinnig.

Unter Kälte dehnt sich die Bimetallfeder aus, so daß zusätzlich zur Kraft der Feder 15 die Kraft der Bimetallfeder wirkt, wodurch der Schaltpunkt des Differenzdruckbegrenzers 8 heraufgesetzt wird.

Unter Wärme zieht sich die Bimetallfeder 20 zusammen, so daß ihre Länge kleiner wird als die Blocklänge der Steuerfeder 15. Die Bimetallfeder kann daher keine Kraft mehr auf den Steuerkolben 10 ausüben, so daß der Schaltdruck nun nur noch von der Vorspannung der Feder 15 bestimmt wird.

Dies hat zufolge, daß bei tiefen Temperaturen selbst bei einem hohen Druckgefälle am Einlaßventil 6 das Ventil 11, 12 nicht geschlossen wird.

Die Ausführungsform nach Figur 2 entspricht weitgehend der nach Figur 1. Es wurden daher die selben Bezugszeichen verwendet. Ein Unterschied besteht darin, daß der Schließkörper 11 innerhalb des Steuerkolben 10 angeordnet ist. Der Ventilsitz 12 ist am Steuerkolben 10 ausgebildet. Der Ventilschließkörper 11 liegt an einem Stößel 30 an, der am Boden des Gehäuses abgestützt ist. Am Stößel 30 ist ein Kragen 31 ausgebildet. Zwischen diesem Kragen und dem Steuerkolben 10 ist die Bimetallfeder 20 in Form eines Tellerfederpakets 32 angeordnet.

In der gezeigten Grundstellung liegt der Steuerkolben 10 an der rechten Gehäusewand an. Der Stößel 30 hält den Ventilkörper 11 vom Ventilsitz 12 entfernt. Es besteht ein freier Ventildurchgang.

Sobald am Einlaßventil 6 ein Druckgefälle anliegt, das oberhalb des Schaltpunktes liegt, der durch die Steuerfeder 15 vorgegeben wird, wird der Steuerkolben 10 nach links verschoben, so daß der Ventilsitz 12 an den Schließkörper 11 angelegt wird. Der Ventildurchgang ist geschlossen.

Unter Kälte dehnt sich die Bimetallfeder 20 aus und legt sich sowohl an den Kragen 31 als auch an den Steuerkolben 10 an.

Wird nun der Steuerkolben 10 auf Grund eines Druckgefälles am Einlaßventil 6 verschoben, wird der Stößel 30 mit verschoben, so daß der Schließkörper 11 im Abstand zum Ventilsitz 12 verbleibt. Es besteht weiterhin ein freier Ventildurchgang.

Unter Wärmeeinfluß zieht sich die Bimetallfeder 20 wieder zusammen und liegt mit einem Spiel zwischen dem Kragen 31 des Stößels 30 und dem Steuerkolben 10.

### Bezugszeichenliste

- 1: Hauptbremszylinder
- 2: Pumpe
- 3: Bremsleitung
- 4: Rücklaufleitung
- 5: Vorratsbehälter
- 6: Einlaßventil
- 7: Auslaßventil
- 8: Differenzdruckbegrenzer
- 9: Rückschlagventil
- 10: Steuerkolben
- 11: Schließkörper
- 12: Ventilsitz
- 13: 1. Anschluß
- 14: 2. Anschluß
- 15: Steuerfeder
- 16: Gehäuse
- 17: Steuerraum
- 18: Zweigleitung
- 19: Auslaßraum
- 20: Bimetallfeder
- 21: Blattfeder
- 21': Blattfeder
- 22: Führungsteil
- 22': Führungsteil
- 23: Radbremse
- 30: Stößel
- 31: Kragen
- 32: Tellerfederpaket

## Patentansprüche

1. Blockiergeschützte, hydraulische Bremsanlage mit mindestens einer Radbremse (23) und einer Hilfsdruckquelle (Pumpe 2), wobei in die Bremsleitung (3) zwischen der Hilfsdruckquelle und der Radbremse (23) ein Einlaßventil (6) eingesetzt und die Radbremse (23) über ein Auslaßventil (7) an eine Rücklaufleitung (4) angeschlossen ist, wobei in die Leitung zwischen der Hilfsdruckquelle und dem Einlaßventil (6) ein Differenzdruckbegrenzer (8) eingefügt ist, dessen Steuerkolben (10) sowohl von der Kraft einer Feder (15) als auch vom Druck in der Radbremse (23) in einem die Bremsleitung (3) öffnenden Sinne beaufschlagt ist, dadurch gekennzeichnet, daß ein temperaturempfindliches, krafterzeugendes Element (20) auf den Steuerkolben (10) einwirkt, das bei einer nicht geregelten Bremsung im gesamten Temperaturbereich der Bremsflüssigkeit einen schnellen, ungehinderten Druckaufbau bewirkt.

2. Bremsanlage nach Anspruch 1 dadurch gekennzeichnet, daß das Element eine Bimetallfeder (20) ist.

3. Bremsanlage nach Anspruch 2 dadurch gekennzeichnet, daß die Bimetallfeder einerseits am Steuerkolben (10) und andererseits am Ventilgehäuse (16) abgestützt ist, wobei ein Schließkörper (11) fest mit dem Steu- erkolben (10) verbunden ist.

4. Bremsanlage nach Anspruch 2 dadurch gekennzeichnet, daß die Steuerfeder (15) und die Bimetallfeder (20) gleichsinnig auf den Steuerkolben (10) einwirken.

5. Bremsanlage nach Anspruch 2 dadurch gekennzeichnet, daß die Bimetallfeder (20) aus zwei gebogenen Blattfedern (21, 21') besteht, die mit ihren konvexen Seiten jeweils in der Mitte aneinander befestigt sind, wobei die Blattfedern (21, 21') in einer Ebene liegen.

6. Bremsanlage nach Anspruch 5 dadurch gekennzeichnet, daß jeweils ein Ende einer Blattfeder (21, 21') in einen Führungskörper (22, 22') eingreift, wobei der eine Führungskörper am Steuerkolben (10) und der andere Führungskörper am Boden des Gehäuses (16) anliegt.

7. Bremsanlage nach Anspruch 6 dadurch gekennzeichnet, daß die Einheit bestehend aus den Blattfedern (21, 21') und den zugehörigen Führungskörpern (22, 22') innerhalb der Steuerfeder (15) angeordnet ist.

8. Bremsanlage nach Anspruch 2 dadurch gekennzeichnet, daß der Schließkörper (11) an einen Stößel (30) anliegt, der am Gehäuse (16) abgestützt ist, wobei der Ventilsitz (12) am Steuerkolben (10) ausgebildet ist.

9. Bremsanlage nach Anspruch 8 dadurch gekennzeichnet, daß die Bimetallfeder (20) einerseits am Steuerkolben (10) und andererseits am Stößel (30) abgestützt ist.

10. Bremsanlage nach Anspruch 9 dadurch gekennzeichnet , daß die Bimetallfeder (20) so ausgebildet ist, daß sie bei Kälte den Stift (30) derart relativ zum Steuerkolben (10) bewegt, daß der Schließkörper (11) vom Ventilsitz (12) abgehoben wird.

11. Bremsanlage nach Anspruch 2 dadurch gekennzeichnet, daß die Bimetallfeder in Form eines Teilerfederpakets (32) ausgebildet ist.

## Claims

1. An anti-lock hydraulic brake system comprising at least one wheel brake (23) and an auxiliary-pressure source (pump 2), an inlet valve (6) being inserted into the brake conduit (3) between the auxiliary-pressure source and the wheel brake (23), and the wheel brake (23) connecting to a return conduit (4) via an outlet valve (7), with a differential pressure limiter (8) being inserted into the conduit between the auxiliary-pressure source and the inlet valve (6), the control piston (10) of which limiter is acted upon by both the force of a spring (15) and the pressure in the wheel brake (23) in a manner opening the brake conduit (3), **characterised** in that a temperature-responsive force-generating element (20) acts upon the control piston (10) and effects a rapid unhindered pressure increase in the entire temperature range of the brake fluid in a non-controlled braking operation.

2. A brake system as claimed in claim 1, **characterised** in that the element is a bimetal spring (20).

3. A brake system as claimed in claim 2, **characterised** in that the bimetal spring is supported on the control piston (10), on the one hand, and on the valve housing (16), on the other hand, with a closure member (11) being rigidly coupled to the control piston (10).

4. A brake system as claimed in claim 2, **characterised** in that the control spring (15) and the bimetal spring (20) act upon the control piston (10) in the same direction.

5. A brake system as claimed in claim 2, **characterised** in that the bimetal spring (20) is composed of two bent leaf springs (21, 21') which, with their convex sides, are attached to each other in the middle, the said leaf springs (21, 21') lying in one plane.

6. A brake system as claimed in claim 5, **characterised** in that one each end of a leaf spring (21, 21') engages into a guide member (22, 22'), the one guide member abutting on the control piston (10), while the other guide member abuts on the bottom of the housing (16).

7. A brake system as claimed in claim 6, **characterised** in that the assembly unit comprising the leaf springs (21, 21') and the assigned guide members (22, 22') is arranged within the control spring (15).

8. A brake system as claimed in claim 2, **characterised** in that the closure member (11) abuts on a tappet (30) which is supported on the housing (16), with the valve seat (12) being provided on the control piston (10).

9. A brake system as claimed in claim 8, **characterised** in that the bimetal spring (20) is supported on the control piston (10), on the one hand, and on the tappet (30), on the other hand.

10. A brake system as claimed in claim 9, **characterised** in that the bimetal spring (20) is designed such as to move at low temperatures the pin (30) in relation to the control piston (10) in such a manner that the closure member (11) is lifted from the valve seat (12).

11. A brake system as claimed in claim 2, **characterised** in that the bimetal spring is designed as a cup spring assembly (32).

## Revendications

1. Système de freinage hydraulique anti-blocage des roues, comprenant au moins un frein de roue (23) et une source de pression auxiliaire (pompe 2), un clapet d'admission (6) étant inséré dans la conduite de frein (3) entre la source de pression auxiliaire et le frein de roue (23), et le frein de roue (23) étant raccordé à une conduite de retour (4) par l'intermédiaire d'un clapet de sortie (7), un limiteur de pression différentielle (8) étant inséré dans la conduite disposée entre la source de pression auxiliaire et le clapet d'admission (6), limiteur de pression dont le piston de commande (10) est rappelé dans le sens de l'ouverture de la conduite de frein (3), à la fois par la force d'un ressort (15) et par la pression régnant dans le frein de roue (23), caractérisé en ce qu'un élément thermosensible (20) générateur de force agit sur le piston de commande (10), qui, lors d'un freinage non régulé, produit une montée en pression rapide et libre sur toute la plage de température du liquide de frein.

2. Système de freinage selon la revendication 1, caractérisé en ce que l'élément est un ressort bimétallique (20).

3. Système de freinage selon la revendication 2, caractérisé en ce que le ressort bimétallique s'appuie d'un côté sur le piston de commande (10) et de l'autre côté sur le corps de clapet (16), un corps obturateur (11) étant relié de façon solidaire au piston de commande (10).

4. Système de freinage selon la revendication 2, caractérisé en ce que le ressort de commande (15) et le ressort bimétallique (20) agissent dans le même sens sur le piston de commande (10).

5. Système de freinage selon la revendication 2, caractérisé en ce que le ressort bimétallique (20) est constitue de deux lames de ressort cintrées (21, 21') dont les faces convexes sont fixées l'une sur l'autre au centre de celles-ci, les lames de ressort (21, 21') étant situées dans un même plan.

6. Système de freinage selon la revendication 5, caractérisé en ce que chaque extrémité de lame de ressort (21, 21') s'engage dans un corps de guidage (22, 22'), l'un des corps de guidage s'appuyant sur le piston de commande (10) et l'autre corps de guidage s'appuyant sur le fond du corps de clapet (16).

7. Système de freinage selon la revendication 6, caractérisé en ce que l'unité composée des lames de ressort (21, 21') et des corps de guidage correspondants (22, 22') est agencée à l'intérieur du ressort de commande (15).

8. Système de freinage selon la revendication 2, caractérisé en ce que le corps obturateur (11) s'applique sur un poussoir (30) qui s'appuie sur le corps de clapet (16), le siège de clapet (12) étant réalisé dans le piston de commande (10).

9. Système de freinage selon la revendication 8, caractérisé en ce que le ressort bimétallique (20) s'appuie d'un côté sur le piston de commande (10) et de l'autre côté sur le poussoir (30).

10. Système de freinage selon la revendication 9, caractérisé en ce que le ressort bimétallique (20) est réalisé de telle sorte qu'à froid, il déplace le poussoir (30) par rapport au piston de commande (10), de manière telle que le corps obturateur (11) se trouve soulevé du siège de clapet (12).

11. Système de freinage selon la revendication 2, caractérisé en ce que le ressort bimétallique est réalisé sous forme d'un paquet de rondelles-ressorts (32).
